# EUROPEAN PATENT APPLICATION

(11) **EP 3 937 098 A1**
(43) Date of publication of application: **12.01.2022**
(21) Application number: 20769040.5
(22) Date of filing: 02.03.2020
(51) Int. Cl.: G06Q 10/04, G06Q 50/02, A01G 7/00

(54) **CROP YIELD AMOUNT PREDICTION PROGRAM AND CULTIVATION ENVIRONMENT ASSESSMENT PROGRAM**

(30) Priority: 08.03.2019 JP 2019043082; 01.04.2019 JP 2019069869
(71) Applicant: Assest Corporation, Kashiwa-shi, Chiba, 277-0871 (JP)
(72) Inventor: SAWADA Ayako, Kashiwa-shi, Chiba 277-0871 (JP)
(74) Representative: Rings, Rolf
(86) International application number: PCT/JP2020/008598
(87) International publication number: WO 2020/184241

(57) **Abstract**

A crop yield prediction program for predicting a yield of a crop causes a computer to execute: a degree-of-association acquisition step of acquiring in advance a degree of association between a combination of reference image information which is a captured image of a growing crop and reference soil information about a soil in which the crop is planted and a yield of the growing crop as harvested for the combination, the degree of association being represented in three or more levels; an information acquisition step of, when making a new prediction of the yield of the crop, capturing an image of a new growing crop to acquire image information and to acquire soil information about a soil in which the crop is planted; and a prediction step of predicting a yield of the new growing crop with reference to the degree of association acquired at the degree-of-association acquisition step and based on the image information and soil information acquired through the information acquisition step.

## Description

### [Technical Field]

The present invention relates to a crop yield prediction program for automatically performing a crop yield prediction that predicts the yield of a crop, and a cultivation environment assessment program for assessing the normality of a cultivation environment in which a crop is cultivated.

### [Background Art]

With the aging of the agricultural population, there are problems that the number of veteran farmers who have farming skills is decreasing, and young farmers to whom the skills are to be passed on are short these days. Under these circumstances, instead of the veteran farmers passing on the skill, the idea of assisting the work plan of agricultural work with artificial intelligence has been proposed.

### [Summary of Invention]

### [Technical Problem]

In order to assist the work plan of agricultural work with artificial intelligence, it is necessary to predict the prospective yield and quality of a growing crop. If the yield and quality can be predicted, they can be fed back to the work plan to be improved. However, so far there is proposed no particular technique of predicting the yield and quality of a crop with high accuracy.

In addition to this, when an abnormality such as a failure occurs in equipment that provides a cultivation environment, this results in rapid deterioration of the cultivation environment of crops. If a failure occurs in the control equipment, it may take some time to complete to repair it after calling a contractor. Accordingly, it is necessary to detect signs of the failure in advance if possible and issue an alert as soon as possible. In particular, if a failure occurs in the temperature and humidity control equipment at the stage of seedlings of crops or before harvesting the crops, it may be too late unless the equipment is shut down early. So far and currently there is proposed no particular technique in which the normality of such a cultivation environment is monitored at the equipment side that provides the cultivation environment, and an alert is immediately issued when an abnormality occurs or a sign of the abnormality appears.

Therefore, the present invention has been devised in view of the above-mentioned problems, and an object of the present invention is to provide a crop yield prediction program and a crop quality prediction program which are capable of predicting yield and quality of a crop currently growing with high accuracy. Another object of the present invention is to provide a cultivation environment assessment program capable of assessing normality of a cultivation environment at equipment side that provides the cultivation environment with high accuracy and issuing an alert immediately when a failure occurs in the equipment or when a sign of the failure appears.

### [Solution to Problem]

A crop yield prediction program according to the present invention is for predicting a yield of a crop. The crop yield prediction program causes a computer to execute: a reference information acquisition step of acquiring reference image information and reference soil information from a captured image of a growing crop, any of a growth state of the crop, damage caused by pests on the crop, and disease occurring in the crop being extracted in the reference image information, a result of identifying components of a soil in which the crop is planted being reflected on the reference soil information; a degree-of-association acquisition step of acquiring a degree of association between: a combination of the reference image information and the reference soil information acquired in the reference information acquisition step; and a yield of the growing crop as harvested for the combination, the degree of association being represented in three or more levels; an information acquisition step of, when making a new prediction of the yield of the crop, capturing an image of a new growing crop to acquire image information in which any of a growth state of the crop, damage caused by pests on the crop, and disease occurring in the crop is extracted, and acquiring soil information about a soil in which the crop is planted; and a prediction step of predicting a yield of the new growing crop with reference to the degree of association acquired at the degree-of-association acquisition step and based on the image information and the soil information acquired through the information acquisition step.

A crop yield prediction program according to the present invention is for predicting a yield of a crop. The crop yield prediction program causes a computer to execute: a reference information acquisition step of acquiring reference image information and reference external environment information from a captured image of a growing crop, any of a growth state of the crop, damage caused by pests on the crop, and disease occurring in the crop being extracted in the reference image information, a disaster situation including flood and drought in a process of growing the crop being detected in the reference external environment information; a degree-of-association acquisition step of acquiring a degree of association between: a combination of the reference image information and the reference soil information acquired in the reference information acquisition step; and a yield of the growing crop as harvested for the combination, the degree of association being represented in three or more levels; an information acquisition step of, when making a new prediction of the yield of the crop, capturing an image of a new growing crop to acquire image information in which any of a growth state of the crop, damage caused by pests on the crop, and disease occurring in the crop is extracted, and acquiring external environment information about a disaster situation including flood and drought in a process of growing the crop; and a prediction step of predicting a yield of the new growing crop with reference to the degree of association acquired at the degree-of-association acquisition step and based on the image information and the external environment information acquired through the information acquisition step.

A cultivation environment assessment program according to the present invention is for assessing normality of a cultivation environment in which a crop is cultivated. The cultivation environment assessment program causes a computer to execute: a degree-of-association acquisition step of acquiring in advance a degree of association between: reference equipment data including any one or more of electric power, electricity, voltage, vibration, and sound acquired from air conditioning equipment that provides a cultivation environment for cultivating the crop; and normality of a cultivation environment including temperature or humidity, the degree of association being represented in three or more levels; an information acquisition step of, when making a new assessment of a cultivation environment of the crop, acquiring equipment data corresponding to the reference equipment data of any one or more of electric power, electricity, voltage, vibration, and sound from the air conditioning equipment that provides the cultivation environment; and an assessment step of assessing normality of the cultivation environment including temperature or humidity by using the degree of association acquired at the degree-of-association acquisition step and based on the equipment data acquired through the information acquisition step.

### [Advantageous Effects of Invention]

It is possible to predict the yield and quality of a crop currently growing with high accuracy.

### [Brief Description of Drawings]

[Fig. 1] Fig. 1 is a block diagram illustrating the whole configuration of a yield prediction system to which the present invention is applied.
[Fig. 2] Fig. 2 is a diagram illustrating a specific configuration example of a prediction apparatus.
[Fig. 3] Fig. 3 illustrates an example in which degrees of association between yields are made for a combination of reference image information and reference soil information.
[Fig. 4] Fig. 4 illustrates an example in which degrees of association between qualities are made for a combination of reference image information and reference soil information.
[Fig. 5] Fig. 5 illustrates an example in which degrees of association between yields are made for a combination of reference image information and reference external environment information.
[Fig. 6] Fig. 6 illustrates an example in which degrees of association between qualities are made for a combination of reference image information and reference external environment information.
[Fig. 7] Fig. 7 illustrates an example in which degrees of association between yields are made for a combination of reference image information and reference history information.
[Fig. 8] Fig. 8 illustrates an example in which degrees of association between qualities are made for a combination of reference image information and reference history information.
[Fig. 9] Fig. 9 illustrates an example in which degrees of association between yields are made for a combination of reference image information, reference soil information, and reference period information.
[Fig. 10] Fig. 10 illustrates an example in which degrees of association between yields are made for a combination of reference image information, reference soil information, and reference type information.
[Fig. 11] Fig. 11 illustrates an example in which degrees of association between cultivation environments are made for reference equipment data.
[Fig. 12] Fig. 12 illustrates an example in which degrees of association between cultivation environments are made for a combination of reference equipment data and reference environment data.
[Fig. 13] Fig. 13 illustrates an example in which degrees of association between cultivation environments are made for a combination of reference equipment data and reference crop state data.
[Fig. 14] Fig. 14 illustrates an example in which degrees of association between cultivation environments are made for a combination of reference equipment data and reference crop growing phase data.

### [Description of Embodiments]

Hereinafter, a crop yield prediction program to which the present invention is applied will be described in detail with reference to the drawings.

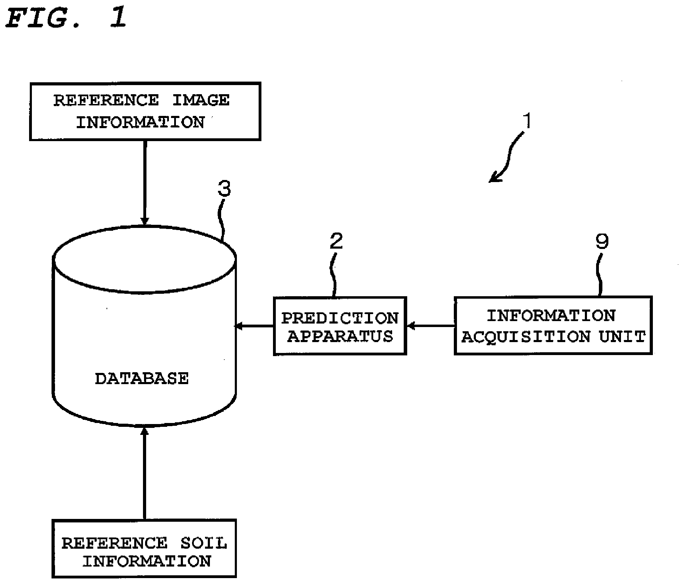

Fig. 1 is a block diagram illustrating the whole configuration of a yield prediction system 1 in which a crop yield prediction program to which the present invention is applied is implemented. The yield prediction system 1 includes an information acquisition unit 9, a prediction apparatus 2 connected to the information acquisition unit 9, and a database 3 connected to the prediction apparatus 2.

The information acquisition unit 9 is a device for a person who uses this system to input various commands and information, and specifically, includes a keyboard, buttons, a touch panel, a mouse, switches, and the like. The information acquisition unit 9 is not limited to a device for inputting text information, and may include a device such as a microphone that can detect voice and convert it into text information. Further, the information acquisition unit 9 may be configured as an image capturing device capable of capturing an image, such as a camera. The information acquisition unit 9 may include a scanner having a function of recognizing a character string from a paper-based document. Further, the information acquisition unit 9 may be integrated with the prediction apparatus 2 described later. The information acquisition unit 9 outputs the detected information to the prediction apparatus 2. Further, it may include various sensors for measuring the external environment, such as a temperature sensor, a humidity sensor, and a rainfall sensor.

The database 3 stores various information on the cultivation of crops of the past. Examples to be recorded there include captured image data of a growth state of a crop, image data indicating damage caused by pests on a crop and damage caused by diseases on a crop, soil data in which a soil in which a crop is planted is analyzed, external environment data detected during the process of growing a crop (e.g., data on weather conditions such as solar radiation, temperature, humidity, wind direction, and rainfall, data on disaster conditions such as typhoons, floods, droughts, and sunshine), data on agricultural work history of the past, data on a growing period of a crop, and data on the type of a crop.

The prediction apparatus 2 includes, for example, an electronic device such as a personal computer (PC), but may be embodied as any other electronic device such as a mobile phone, a smartphone, a tablet terminal, and a wearable terminal, instead of the PC. The user obtains a search solution from this prediction apparatus 2, which makes it possible to predict the yield and quality of a crop currently growing with high accuracy.

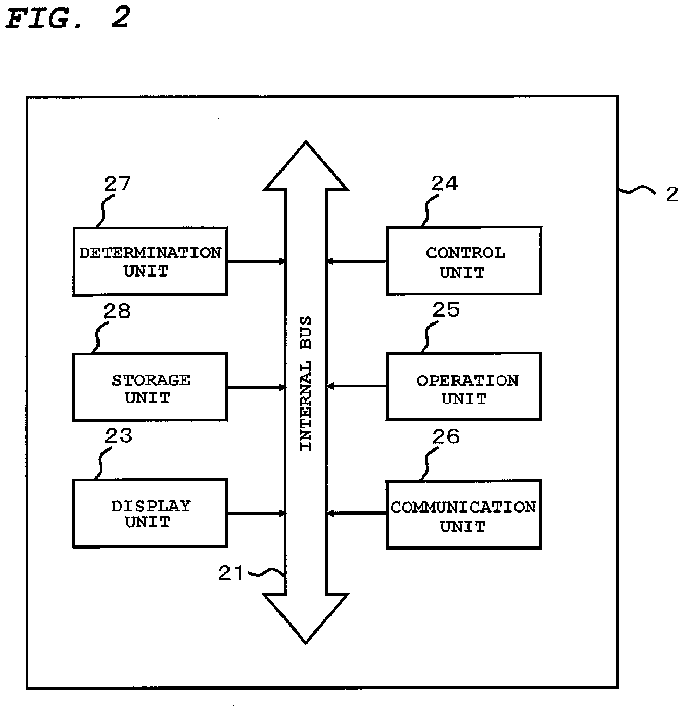

Fig. 2 illustrates a specific configuration example of the prediction apparatus 2. The prediction apparatus 2 includes a control unit 24 for controlling the entire prediction apparatus 2, an operation unit 25 for inputting various control instructions via operation buttons, a keyboard, or the like, a communication unit 26 for performing wired communication or wireless communication, a determination unit 27 for making various assessments, and a storage unit 28 for storing a program for performing a search to be executed, typified by a hard disk, which are all connected to an internal bus 21. In addition, a display unit 23, which serves as a monitor that actually displays information, is connected to the internal bus 21.

The control unit 24 is a so-called central control unit for controlling each component mounted in the prediction apparatus 2 by transmitting a control signal to the component via the internal bus 21. Further, the control unit 24 transmits various control instructions via the internal bus 21 in response to operations through the operation unit 25.

The operation unit 25 is embodied by a keyboard or a touch panel, and an execution instruction for executing a program is input from the user. When the execution instruction is input by the user, this operation unit 25 notifies the control unit 24 of the execution instruction. In response to receiving this notification, the control unit 24 executes a desired processing operation in cooperation with the components including the determination unit 27. This operation unit 25 may be embodied as the information acquisition unit 9 described above.

The determination unit 27 is responsible for determining the yield of a crop and the quality of a crop. In executing an estimation operation, the determination unit 27 reads out various information stored in the storage unit 28 and various information stored in the database 3 as necessary information. This determination unit 27 may be controlled by artificial intelligence. This artificial intelligence may be based on any well-known artificial intelligence technique.

The display unit 23 includes a graphic controller that creates a display image based on the control by the control unit 24. The display unit 23 is realized by, for example, a liquid crystal display (LCD) or the like.

In the case where the storage unit 28 is composed of a hard disk, predetermined information is written to a corresponding address in the storage unit 28, and is read out from the storage unit 28 as needed, based on the control by the control unit 24. Further, the storage unit 28 stores a program for executing the present invention. This program is read and executed by the control unit 24.

The operation of the crop yield prediction system 1 having the above-described configuration will be described.

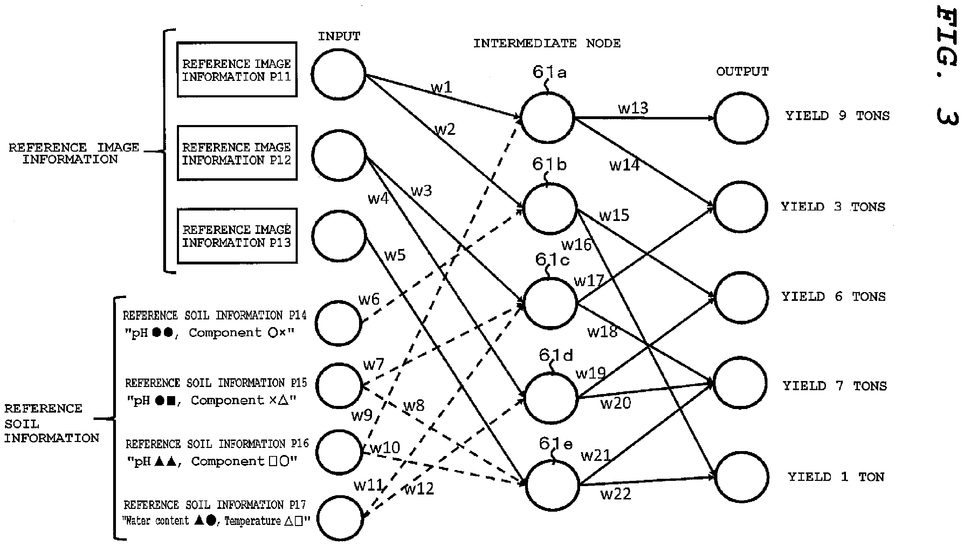

In the yield prediction system 1, for example, as illustrated in Fig. 3, it is premised that combinations of reference image information and reference soil information are made. The reference image information is an image, of a crop in growth process, captured by a camera. The captured image of a crop may be images sequentially captured in time series at the stages of sowing seeds, growing seedlings, and then harvesting. Further, the captured image of a crop may include an image of a capturing range in which the entire field or paddy field is captured, or may include an image, of the leaves, stems, fruits, etc. of the crop in the field or paddy field, captured at a close distance. Further, the captured image may be captured through an unmanned aerial vehicle such as a drone, or may be captured by a camera installed on the ground. With such a camera, it is possible to detect the growth state of a crop, damage caused by pests on the crop, disease occurring in the crop, and the like. Incidentally, for this reference image information, a raw image captured by the camera may be acquired as it is as image information, or only a feature part of the image may be extracted by utilizing a well-known deep learning technique and be used as reference image information.

Further, the reference soil information includes all information about a soil in which a crop is planted. Examples of this reference soil information include components, pH, water content, temperature and the like of the soil. The results of actually collecting the components of the soil and analyzing the components based on a chemical analysis method may be used, or data detected by a well-known soil sensor may be used. Further, an image of the soil captured by a camera, and only a feature part of the image may be extracted by utilizing a well-known deep learning technique and be also used.

In the example of Fig. 3, it is assumed that, as input data, reference image information P11 to P13 and reference soil information P14 to 17 are used, for example. As such input data, intermediate nodes illustrated in Fig. 3 are combinations of the reference soil information and the reference image information. Each intermediate node is further linked to outputs. For each output, a yield as an output solution is represented.

The combinations (intermediate node) of the reference image information and the reference soil information are associated with each other through three or more levels of degrees of association for yields of a crop, as the output solutions. The reference image information and the reference soil information are arranged on the left side with respect to the degrees of association, and the yields of the crop are arranged on the right side with respect to the degrees of association. The degree of association indicates which of the yields of the crop has high association with the reference image information and the reference soil information which are arranged on the left side. In other words, this degree of association is an index indicating what yield of the crop is likely to be associated with each piece of the reference image information and the reference soil information, and also indicates the accuracy in selecting the most probable yield of the crop from the reference image information and the reference soil information. In the example of Fig. 3, w13 to w22 are illustrated as the degrees of association. These w13 to w22 are represented in 10 levels as listed in Table 1 below, in which the closer to 10 points, the higher the degree of association between the corresponding combination as an intermediate node and the corresponding yield of the crop as an output; on the contrary, the closer to 1 point, the lower the degree of association between the corresponding combination as an intermediate node and the corresponding yield of the crop as an output.

**[Table 1]**

| Symbol | Degree of association |
|---|---|
| w13 | 7 |
| w14 | 2 |
| w15 | 9 |
| w16 | 5 |
| w17 | 2 |
| w18 | 1 |
| w19 | 8 |
| w20 | 6 |
| w21 | 10 |
| w22 | 3 |

The prediction apparatus 2 acquires in advance such degrees of association w13 to w22 in three or more levels illustrated in Fig. 3. Specifically, in assessing the actual search solution, the prediction apparatus 2 accumulates the past data on the reference image information, the reference soil information, and how much the yield of a crop was for these pieces of information, analyzes and examines them, and thus makes the degrees of association illustrated in Fig. 3 in advance.

For example, it is assumed that a state of a crop damaged by pests appears in the reference image information P11. Then, when the components of the soil in which the crop was actually planted are investigated and as a result, "pH ••, Component ○×" corresponding to the reference soil information P14 were obtained, a follow-up investigation of the previous data on the actual crop until harvested is performed to extract how much the yield of the crop was therefrom. The yield may be represented in any unit, and for example, the yield of a crop per unit area may be represented by weight (ton).

The analyzing and examining may be performed by artificial intelligence. In such a case, for example, for the reference image information P11 and the reference soil information P16 of "pH ▲▲, Component □○", the actual yield of the crop is analyzed from the past data. If there are many cases where the yield is 9 tons, the degree of association that leads to this yield of 9 tons is set higher. If there are many cases where the yield is 3 tons and there are few cases where the yield is 9 tons, the degree of association that leads to the yield of 3 tons is set higher and the degree of association that leads to the yield of 9 tons is set lower. For example, for an intermediate node 61a as an example, it is linked to the outputs of the yield of 9 tons and the yield of 3 tons, and from the previous cases, the degree of association of w13, which leads to the yield of 9 tons, is set to 7 points, and the degree of association of w14, which leads to the yield of 3 tons, is set to 2 points.

Further, the degrees of association illustrated in Fig. 3 may be those between nodes of an artificial intelligence-based neural network. Specifically, the weighting coefficients for the outputs of the nodes of this neural network corresponds to the above-mentioned degrees of association. Further, the network is not limited to the neural network, and may be of all decision-making factors constituting artificial intelligence.

In the example of the degrees of association illustrated in Fig. 3, a node 61b is a node in which the reference soil information P14 is combined with the reference image information P11 and for which the degree of association for the yield of 6 tons is w15 and the degree of association for the yield of 1 ton is w16. A node 61c is a node in which the reference soil information P15 and P17 are combined with the reference image information P12 and for which the degree of association for the yield of 3 tons is w17 and the degree of association for the yield of 6 tons is w18.

Such degrees of association are what is called learned data in artificial intelligence. After such learned data is created, when a new determination is actually made on the yield of a crop from now on, the yield of the crop will be determined by using the above learned data. In such a case, new image information is acquired and the soil information is also acquired.

The new image information to be acquired is captured by the camera of the information acquisition unit 9 described above. The target for this capturing is a new crop to be grown.

The acquisition of the soil information is for a soil in which the new crop actually to be grown is planted, and the acquisition method is the same as that for acquiring the above-mentioned reference soil information.

Based on the new image information and the soil information thus acquired, the yield of the crop for which the new image information and the soil information have actually been acquired is predicted. In such a case, the degrees of association illustrated in Fig. 3 (Table 1) acquired in advance is referred to. For example, in the case where the acquired new image information is the same as or similar to P12 and the soil information is P17, a node 61d is associated through the degrees of association, and this node 61d is associated with "yield 6 tons" by w19 and with "yield 7 tons" by the degree of association w20. In such a case, "yield 6 tons" with the highest degree of association is selected as the optimum solution. However, it is not essential to select the one with the highest degree of association as the optimum solution, and "yield 7 tons", which has the lower degree of association but whose association is recognized, may be selected as the optimum solution. Instead of this, it goes without saying that an output solution to which no arrow is connected may be selected, and any other output solution may be selected in any other priority as long as it is based on any degree of association.

Further, Table 2 below provides examples of degrees of association w1 to w12 extending from the inputs.

**[Table 2]**

| Symbol | Degree of association |
|---|---|
| w1 | 8 |
| w2 | 1 |
| w3 | 7 |
| w4 | 6 |
| w5 | 5 |
| w6 | 9 |
| w7 | 3 |
| w8 | 9 |
| w9 | 2 |
| w10 | 4 |
| w11 | 10 |
| w12 | 2 |

An intermediate node 61 may be selected based on such degrees of association w1 to w12 extending from the inputs. In other words, a higher one of the degrees of association w1 to w12 may be given a higher weight to select the intermediate node 61. However, the degrees of association w1 to w12 may all have the same value, and the weights to select the intermediate node 61 may all be the same.

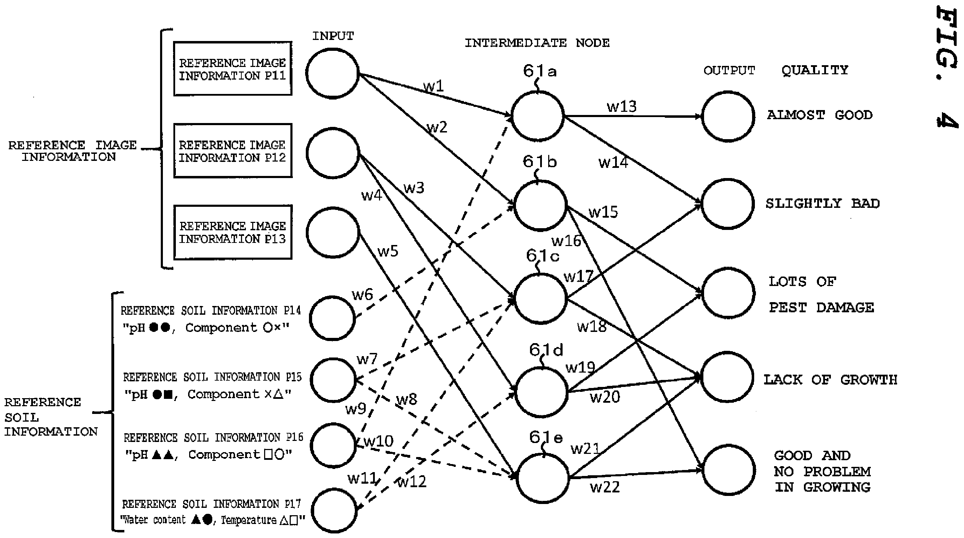

Fig. 4 illustrates the outputs are not the yields but the qualities of a crop to be output in the same manner. Similarly, in such a case, the quality of the crop for the reference image information and the reference soil information is investigated in advance from the past data, and the degrees of association are set in the same manner to build a learned model. Then, image information and soil information are similarly acquired from a growing crop, and the quality of the crop is predicted by referring to the learned model (degrees of association) from the acquired information. This makes it possible to predict the quality of the crop as well as the yield.

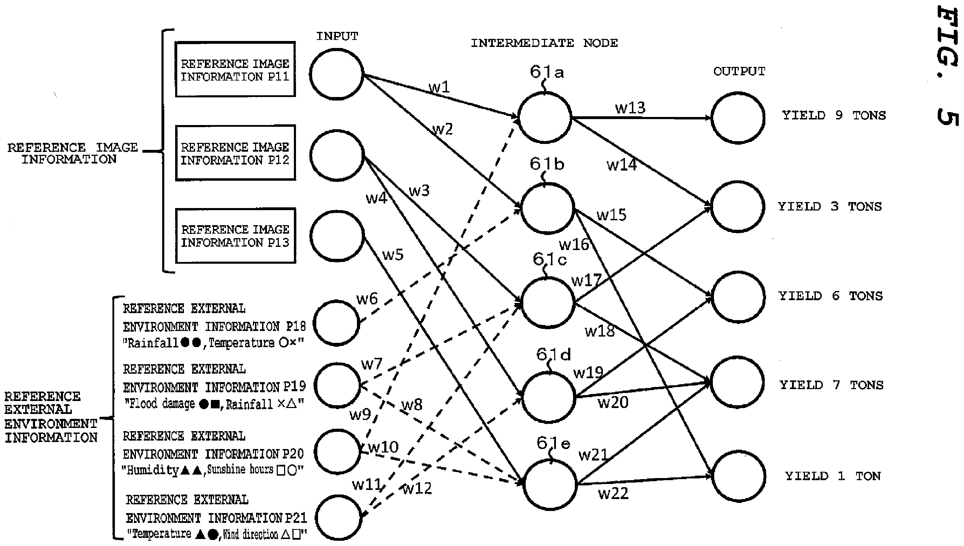

Fig. 5 illustrates an example in which combinations of the above-mentioned reference image information and reference external environment information, and three or more levels of degrees of association between the combinations and yields of a crop are set.

As the input data, such reference image information and reference external environment information are arranged. As such input data, intermediate nodes illustrated in Fig. 5 are combinations of the reference external environment information and the reference image information.

The reference external environment information is external environment data detected in the process of growing the corresponding crop, and is, for example, data on weather conditions such as solar radiation, temperature, humidity, wind direction, and rainfall, data on disaster conditions such as typhoons, floods, droughts, and sunshine, and the like. Actually, the reference external environment information is preferably about, but not limited to, an external environment acquired at the time of acquisition of the reference image information. Such reference external environment information may be about sensing means for acquiring real-time data, such as a temperature sensor, a humidity sensor, a light amount sensor, a wind direction meter, and a rain gauge, or may be about a means for examining damage caused by typhoons, floods, etc. or conditions such as droughts and sunshine ex post facto.

The prediction apparatus 2 acquires in advance such degrees of association w13 to w22 in three or more levels illustrated in Fig. 5. Specifically, in predicting the actual yield of a crop, the prediction apparatus 2 accumulates the data on the reference image information, the reference external environment information, and how much the yield was for these pieces of information, analyzes and examines them, and thus makes the degrees of association illustrated in Fig. 5 in advance.

In the example of the degrees of association illustrated in Fig. 5, a node 61b is a node in which reference external environment information P18 "Rainfall ••, Temperature ○×" is combined with the reference image information P11 and for which the degree of association for the yield of 6 tons is w15 and the degree of association for the yield of 1 ton is w16.

Similarly, in such a case where the degrees of association are set, new image information is acquired and the external environment information is also acquired. The image information corresponds to the reference image information, and the external environment information corresponds to the reference external environment information.

The method of acquiring the external environment information is the same as the method of acquiring the above-mentioned reference external environment information.

In obtaining the yield, the degrees of association illustrated in Fig. 5 acquired in advance are referred to. For example, in the case where the acquired image is the same as or similar to the reference image information P12 and the acquired external environment information is reference external environment information P19, the combination of them is associated with a node 61c, and this node 61c is associated with "yield 3 tons" by the degree of association w17 and with "yield 7 tons" by the degree of association w18. As a result of such degrees of association, the yield of the crop at the time when the new image information and the external environmental information were actually acquired will be obtained based on w17 and w18.

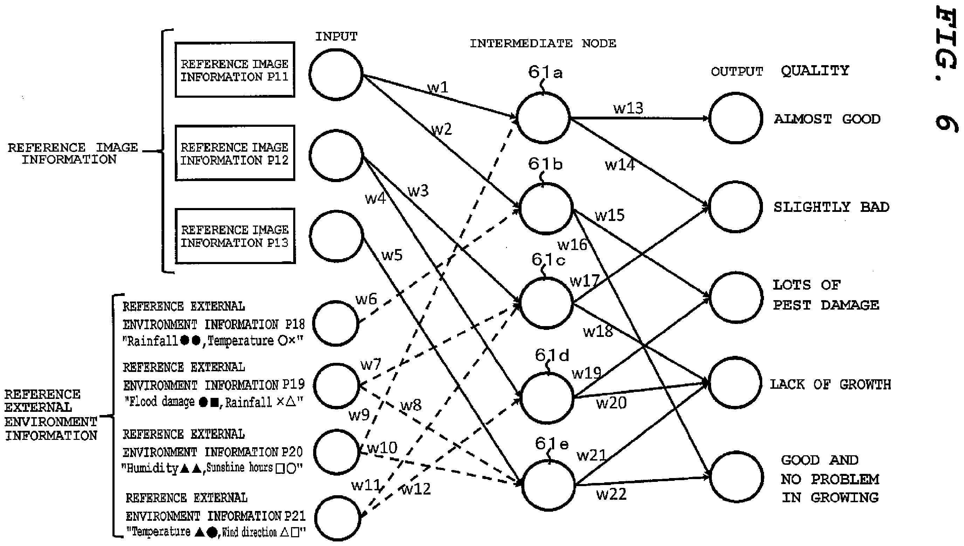

Fig. 6 illustrates the outputs are not the yields but the qualities of a crop to be output in the same manner. Similarly, in such a case, the quality of the crop for the reference image information and the reference external environment information is investigated in advance from the past data, and the degrees of association are set in the same manner to build a learned model. Then, image information and soil method are similarly acquired from a growing crop, and the quality of the crop is predicted by referring to the learned model (degrees of association) from the acquired information. This makes it possible to predict the quality of the crop as well as the yield.

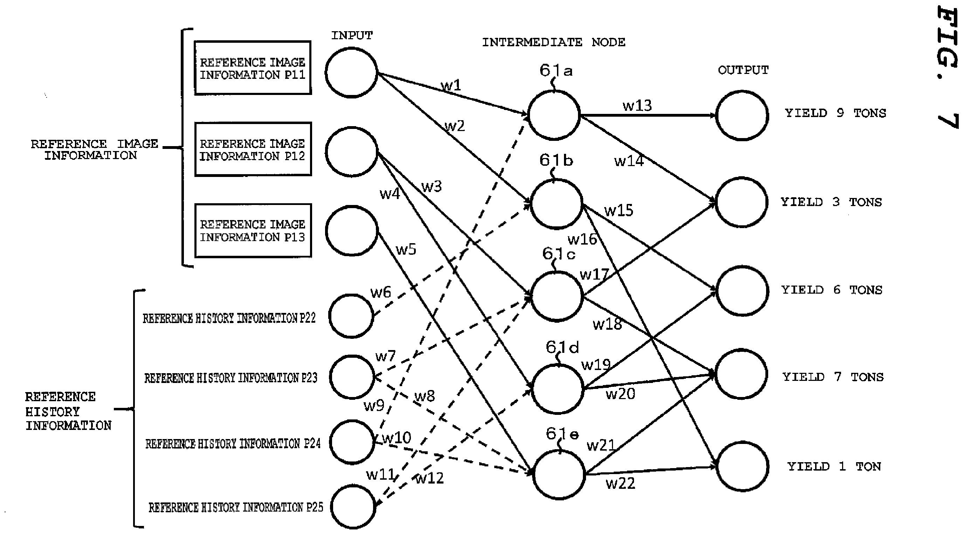

Fig. 7 illustrates an example in which combinations of the above-mentioned reference image information and reference history information, and three or more levels of degrees of association between the combinations and yields of a crop are set.

As the input data, such reference image information and reference history information are arranged. As such input data, intermediate nodes 61 illustrated in Fig. 7 are combinations of the reference history information and the reference image information.

The reference history information is the history of the agricultural work actually performed in the process of growing the crop. It summarizes what kind of agricultural work has been done in order of sowing seeds, planting seedlings, and harvesting. For example, when, how much, and how the agricultural work such as sprinkling water, fertilizing, spraying pesticides, and exterminating weeds was performed are reflected in this reference history information. Actually, this reference history information may include electronic data of an agricultural work diary written by a farmer, or may be acquired through a PC, a smartphone, or the like in which the records of actual agricultural work have been stored.

The prediction apparatus 2 acquires in advance such degrees of association w13 to w22 in three or more levels illustrated in Fig. 7. Specifically, in predicting the actual yield of a crop, the prediction apparatus 2 accumulates the data on the reference image information, the reference history information, and how much the yield was for these pieces of information, analyzes and examines them, and thus makes the degrees of association illustrated in Fig. 7 in advance.

In the example of the degrees of association illustrated in Fig. 7, a node 61b is a node in which reference history information P22 is combined with the reference image information P11 and for which the degree of association for the yield of 6 tons is w15 and the degree of association for the yield of 1 ton is w16.

Similarly, in such a case where the degrees of association are set, new image information is acquired and the history information is also acquired. The image information corresponds to the reference image information, and the history information corresponds to the reference history information.

The method of acquiring the history information is the same as the method of acquiring the above-mentioned reference history information.

In obtaining the yield, the degrees of association illustrated in Fig. 7 acquired in advance are referred to. For example, in the case where the acquired image is the same as or similar to the reference image information P12 and the acquired history information is reference history information P23, the combination of them corresponds to a node 61c, and this node 61c is associated with "yield 3 tons" by the degree of association w17 and with "yield 7 tons" by the degree of association w18. As a result of such degrees of association, new image information and the history information are actually acquired, and then the yield of the crop is obtained based on w17 and w18.

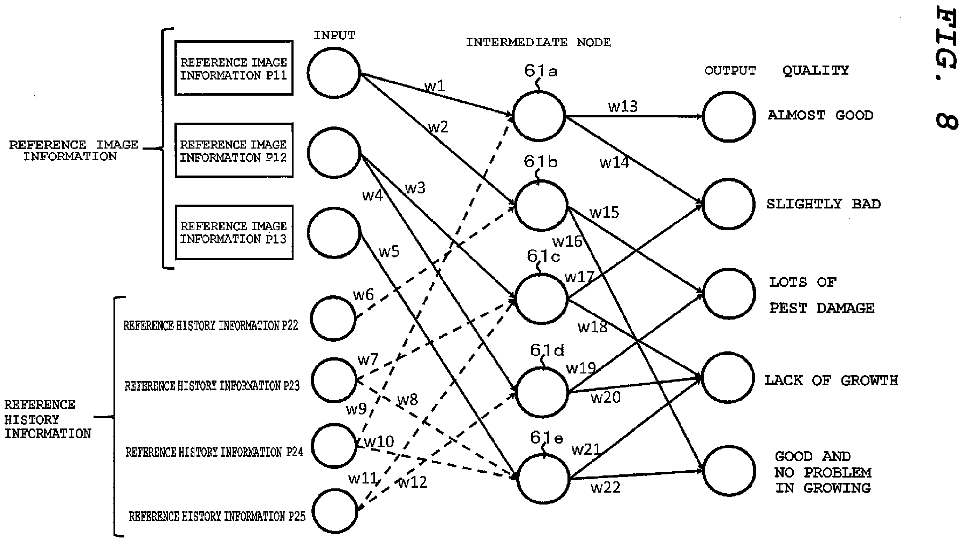

Fig. 8 illustrates the outputs are not the yields but the qualities of a crop to be output in the same manner. Similarly, in such a case, the quality of the crop for the reference image information and the reference history information is investigated in advance from the past data, and the degrees of association are set in the same manner to build a learned model. Then, image information and soil method are similarly acquired from a growing crop, and the quality of the crop is predicted by referring to the learned model (degrees of association) from the acquired information. This makes it possible to predict the quality of the crop as well as the yield.

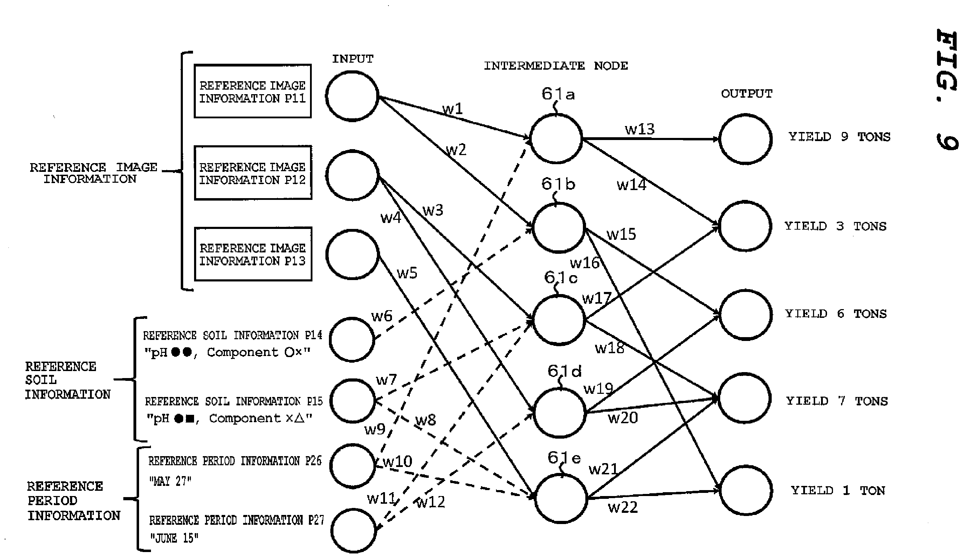

Fig. 9 illustrates an example in which combinations of the above-mentioned reference image information and reference soil information and further reference period information, and three or more levels of degrees of association between the combinations and yields are set.

The reference period information is information indicating when the reference image information was actually acquired.

In such a case, as illustrated in Fig. 9, the degrees of association are expressed for a set of combinations of the reference image information, the reference soil information, and the reference period information so that the combinations correspond to nodes 61a to 61e being intermediate nodes as in the case described above.

For example, in Fig. 9, the node 61c is associated with the reference image information P12 by the degree of association w3, with the reference soil information P15 by the degree of association w7, and with reference period information P27 by the degree of association w11. Similarly, the node 61e is associated with the reference image information P13 by the degree of association w5, with the reference soil information P15 by the degree of association w8, and with reference period information P26 by the degree of association w10.

Similarly, in such a case where the degrees of association are set, the yield is predicted based on the acquired new image information, the soil information, and further the period information at the time of acquisition of the image information.

In obtaining this yield, the degrees of association illustrated in Fig. 9 acquired in advance are referred to. For example, in the case where the acquired image is the same as or similar to the reference image information P12, the acquired soil information is the reference soil information P15, and further the acquired period information is the reference period information P27, the combination of them corresponds to the node 61c, and this node 61c is associated with "yield 3 tons" by the degree of association w17 and with "yield 7 tons" by the degree of association w18. As a result of such degrees of association, a search solution will actually be obtained based on w17 and w18.

In such a case where a combination is made further with the reference period information, alternatively or in addition to the combination of the above-mentioned reference image information and reference soil information, either the reference image information and the reference external environment information or the reference image information and the reference history information may be used to make the combination.

Further, making a combination further with the reference period information is also applicable to the case where the quality of a crop is output as an output solution.

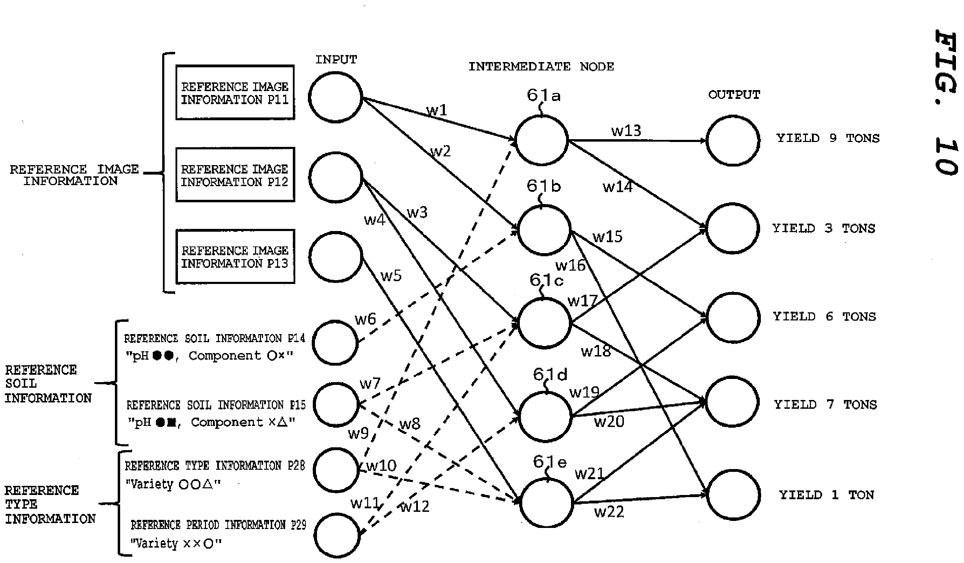

Fig. 10 illustrates an example in which combinations of the above-mentioned reference image information and reference soil information and further reference type information, and three or more levels of degrees of association between the combinations and yields are set.

The reference type information is information on the type and variety of a crop. The type of the crop is acquired by interviewing a farmer and the like who grows the crop or by identifying the crop from an image.

In such a case, as illustrated in Fig. 10, the degrees of association are expressed for a set of combinations of the reference image information, the reference soil information, and the reference type information so that the combinations correspond to nodes 61a to 61e being intermediate nodes as in the case described above.

For example, in Fig. 10, the node 61c is associated with the reference image information P12 by the degree of association w3, with the reference soil information P15 by the degree of association w7, and with reference type information P29 by the degree of association w11. Similarly, the node 61e is associated with the reference image information P13 by the degree of association w5, with the reference soil information P15 by the degree of association w8, and with reference type information P28 by the degree of association w10.

Similarly, in such a case where the degrees of association are set, the yield is predicted based on the acquired new image information, the soil information, and further the type of the crop whose image information is to be acquired.

In obtaining this yield, the degrees of association illustrated in Fig. 10 acquired in advance are referred to. For example, in the case where the acquired image is the same as or similar to the reference image information P12, the acquired soil information is the reference soil information P15, and further the acquired type information is the reference type information P29, the combination of them corresponds to the node 61c, and this node 61c is associated with "yield 3 tons" by the degree of association w17 and with "yield 7 tons" by the degree of association w18. As a result of such degrees of association, a search solution will actually be obtained based on w17 and w18.

In such a case where a combination is made further with the reference type information, alternatively or in addition to the combination of the above-mentioned reference image information and reference soil information, either the reference image information and the reference external environment information or the reference image information and the reference history information, or even those and the reference period information may be used to make the combination.

Further, making a combination further with the reference type information is also applicable to the case where the quality of a crop is output as an output solution.

Note that the present invention may be embodied as a cultivation environment assessment system described below. The configuration of the cultivation environment assessment system uses the information acquisition unit 9 in the harvest amount prediction system 1 described above, the prediction apparatus 2 connected to the information acquisition unit 9, and the database 3 connected to the prediction apparatus 2.

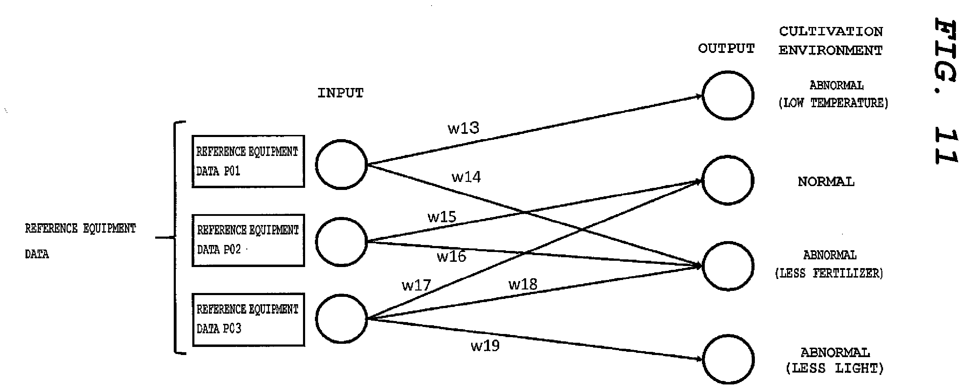

In the cultivation environment assessment system, as illustrated in Fig. 11, it is premised that degrees of association between reference equipment data and the normality of a cultivation environment have been set in three or more levels in advance and acquired. The reference equipment data is data directly acquired from equipment (device) necessary for providing a cultivation environment. The cultivation environment is defined by temperature, humidity, fertilizer supply amount, pesticide supply amount, light, water supply amount, flow rate of gas to be supplied, flow rate and direction of air, illuminance of lighting, or the like. To cultivate crops in automated greenhouses and plant factories in recent years, such a cultivation environment is provided through various equipment. For example, for temperature and humidity, air conditioning equipment is used, and for the supply of fertilizer, water, and pesticide, pipelines and plant equipment for supplying fertilizer are used. Further, for the flows of the gas and air, the pipelines and plant equipment are also used. Further, for the illuminance of lighting, lighting equipment is used.

The reference equipment data includes any data acquired by sensors or measuring instruments which are directly or indirectly installed in such equipment. Examples of this reference equipment data include electric power, electricity, voltage, vibration, sound, light, and radio waves (hereinafter collectively referred to as physical data), which are to be supplied to the various equipment described above; air and liquid flow rates; fertilizer supply amount; pesticide supply amount; and drainage amount in drainage equipment. Operation data is detected including any one or more of physical data for operating the equipment, supply amount data for supplying fertilizer and water, gas flow rate data for supplying and discharging gas, pesticide supply amount data, and light amount of irradiating light. The detecting of this operation data makes it possible to grasp whether the cultivation environment is normal in the current state or has an abnormality. Further, the detection of that operation data makes it possible to estimate whether the cultivation environment may have an abnormality in the near future or remains normal.

In the example of Fig. 11, it is assumed that the input data is, for example, reference equipment data P01 to P03. Such pieces of reference equipment data as the input data are linked to the outputs. For each output, a cultivation environment as an output solution is represented. The states of the cultivation environment include normal, abnormal, and details of abnormality for abnormal (e.g., low temperature, low fertilizer, low light, etc.).

The pieces of reference equipment data are associated with cultivation environments serving as their output solutions through three or more levels of degrees of association. The reference equipment data is arranged on the left side with respect to the degrees of association, and each cultivation environment is arranged on the right side with respect to the degrees of association. The degree of association indicates which of the cultivation environments has high association with the reference equipment data arranged on the left side. In other words, this degree of association is an index indicating what cultivation environment is likely to be associated with each piece of reference equipment data, and also indicates the accuracy in selecting the most probable cultivation environment from the reference equipment data. In the example of Fig. 11, w13 to w19 are illustrated as the degrees of association. These w13 to w19 are represented in 10 levels as listed in Table 1 below, in which the closer to 10 points, the higher the degree of association between the corresponding combination as an intermediate node and the corresponding cultivation environment as an output; on the contrary, the closer to 1 point, the lower the degree of association between the corresponding combination as an intermediate node and the corresponding cultivation environment as an output.

The prediction apparatus 2 acquires in advance such degrees of association w13 to w19 in three or more levels illustrated in Fig. 11. Specifically, in assessing the actual search solution, the prediction apparatus 2 accumulates the past data on the reference equipment data, and how the cultivation environment was for these pieces of information, analyzes and examines them, and thus makes the degrees of association illustrated in Fig. 11 in advance.

For example, it is assumed that the reference equipment data is data related to vibration generated from air conditioning equipment. It is assumed that the air conditioning equipment is often damaged several hours to several days after a specific sign appears in the vibration amount and vibration frequency component of the vibration data. By collecting and analyzing such a data set, the degree of association between the reference equipment data and the abnormality of the cultivation environment (e.g., the temperature of the cultivation environment becomes low due to the breakage of the air conditioner) becomes strong.

The analyzing and examining may be performed by artificial intelligence. In such a case, for example, for the reference equipment data P01, analysis is performed from the past data on the cultivation environment. For the reference equipment data P01, if there are many cases of abnormal cultivation environment, the degree of association that leads to this abnormal is set higher, and if there are many cases of normal cultivation environment, the degree of association that leads to this normal is set higher. For example, in the example of the reference equipment data P01, it is linked to abnormal (low temperature) and abnormal (less fertilizer), and specifically, based on the previous cases, the degree of association of w13 that leads to abnormal (low temperature) is set to 7 points; the degree of association of w14 that leads to abnormal (less fertilizer) is set to 2 points.

Further, the degrees of association illustrated in Fig. 11 may be those between nodes of an artificial intelligence-based neural network. Specifically, the weighting coefficients for the outputs of the nodes of this neural network corresponds to the above-mentioned degrees of association. Further, the network is not limited to the neural network, and may be of all decision-making factors constituting artificial intelligence.

Such degrees of association are what is called learned data in artificial intelligence. After such learned data is created, when a new determination is actually made on the cultivation environment from now on, the cultivation environment will be assessed by using the above learned data. In such a case, new equipment data of various types of equipment that provide the cultivation environment is acquired.

The acquired new equipment data is input by the information acquisition unit 9 described above.

Based on the new equipment data acquired in this way, the cultivation environment actually provided by the equipment is assessed. In such a case, the degrees of association illustrated in Fig. 11 (Table 1) acquired in advance is referred to. For example, if the acquired new equipment data is the same as or similar to P02, it is associated with "normal" by the degree of association w15 and with "abnormal (less fertilizer)" by the degree of association w16. In such a case, "normal" with the highest degree of association is selected as the optimum solution. However, it is not essential to select the one with the highest degree of association as the optimum solution, and "abnormal (less fertilizer)", which has the lower degree of association but whose association is recognized, may be selected as the optimum solution. Instead of this, it goes without saying that an output solution to which no arrow is connected may be selected, and any other output solution may be selected in any other priority as long as it is based on any degree of association.

In this way, from the acquired new equipment data, it is possible to grasp whether or not an abnormality has occurred in the cultivation environment, and if necessary, the details of the abnormality that has occurred. Further, it is possible to identify not only the abnormality currently occurring in the cultivation environment but also an abnormality that may occur in the near future. In such a case, the equipment data acquired in time series is used as data set for learning, and the resulting data is associated with whether or not an abnormality has occurred. For example, when the electric power acquired in time series is gradually weakens and eventually the equipment breaks down to be in an abnormal state, the learning is performed in such a way that the process in which the electric power gradually weakens in time series is associated with the abnormal state of the cultivation environment. Learning with such a learning data set and association with the resulting data set through degrees of association makes it possible to assess the abnormal state in the future. Further, if an abnormal state occurs at the present time or in the future, an alert for attention can be issued.

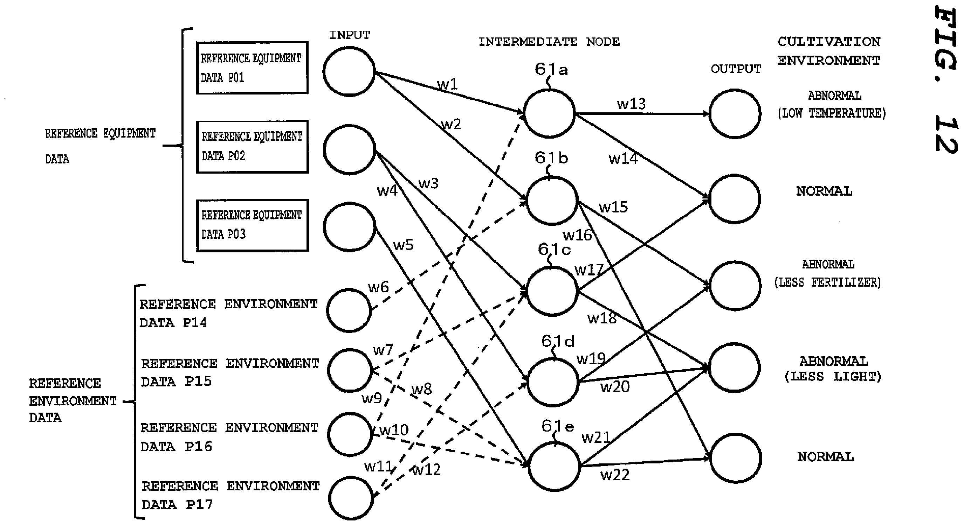

In an example of Fig. 12, it is premised that combinations of reference equipment data and reference environment data are made. The reference environment data is data obtained by directly sensing the cultivation environment, and clearly represents the state of the cultivation environment at the time of the sensing. The cultivation environment to be sensed to obtain this reference environment data may be any one or more of temperature, humidity, fertilizer supply amount, light amount, water supply amount, and gas and air flow rates.

In the example of Fig. 12, it is assumed that the input data is, for example, reference equipment data P11 to P13 and reference environment data P14 to 17. As such input data, intermediate nodes illustrated in Fig. 12 are combinations of the reference equipment data and the reference environment data. Each intermediate node is further linked to outputs. For each output, a cultivation environment as an output solution is represented.

The combinations (intermediate node) of the reference equipment data and the reference environment data are associated with each other through three or more levels of degrees of association for the normalities of cultivation environments, as the output solutions. The reference equipment data and the reference environment data are arranged on the left side with respect to the degrees of association, and the normalities of the cultivation environments are arranged on the right side with respect to the degrees of association. The degree of association indicates whether the corresponding cultivation environment has high association with the reference equipment data and the reference environment data which are arranged on the left side. In other words, this degree of association is an index indicating what normality of the corresponding cultivation environment is likely to be associated with each piece of reference equipment data and reference environment data, and also indicates the accuracy in selecting the most probable normality of the corresponding cultivation environment from the reference equipment data and the reference environment data. In the example of Fig. 12, w13 to w22 are illustrated as the degrees of association. These w13 to w22 are represented in 10 levels as listed in Table 1 in which the closer to 10 points, the higher the degree of association between the corresponding combination as an intermediate node and the normality of the corresponding cultivation environment as an output; on the contrary, the closer to 1 point, the lower the degree of association between the corresponding combination as an intermediate node and the normality of the corresponding cultivation environment as an output.

The prediction apparatus 2 acquires in advance such degrees of association w13 to w22 in three or more levels illustrated in Fig. 12. Specifically, in assessing the actual search solution, the prediction apparatus 2 accumulates the past data on the reference equipment data, the reference environment data, and how the cultivation environment was for these pieces of information, analyzes and examines them, and thus makes the degrees of association illustrated in Fig. 12 in advance.

For example, it is assumed that the equipment data sensed in the past is a certain amount of water supplied per unit time (e.g., 1 liter per minute). Further, it is assumed that the reference environment data is "a temperature of 34°C." When the relationship between the amount of water supplied and the temperature clearly indicates a shortage of water to supplied to the crop, the cultivation environment is considered abnormal (water shortage), and the relationship is used as a data set to be learned and defined in the form of the above-mentioned degree of association.

The analyzing and examining may be performed by artificial intelligence. In such a case, for example, for reference equipment data P01 and reference environment data P16, the normality of the corresponding cultivation environment is analyzed from the past data. If there are many cases of "abnormal (low temperature)" for the cultivation environment, the degree of association that leads to this "abnormal (low temperature)" is set higher, and if there are many cases of "normal" and there are few cases of "abnormal (low temperature)", the degree of association that leads to "normal" is set higher and the degree of association that leads to "abnormal (low temperature)" is set lower. For example, in an example of intermediate node 61a, it is linked to the outputs of "abnormal (low temperature)" and "normal", and specifically, based on the previous cases, the degree of association of w13 that leads to "abnormal (low temperature)" is set to 7 points; the degree of association of w14 that leads to "normal" is set to 2 points.

Further, the degrees of association illustrated in Fig. 12 may be those between nodes of an artificial intelligence-based neural network. Specifically, the weighting coefficients for the outputs of the nodes of this neural network corresponds to the above-mentioned degrees of association. Further, the network is not limited to the neural network, and may be of all decision-making factors constituting artificial intelligence.

In the example of the degrees of association illustrated in Fig. 12, a node 61b is a node in which the reference environment data P14 is combined with the reference equipment data P01 and for which the degree of association for "abnormal (less fertilizer)" is w15 and the degree of association for "normal" is w16. A node 61c is a node in which reference environment data P15 and P17 are combined with reference equipment data P02 and for which the degree of association for "normal" is w17 and the degree of association for "abnormal (less light)" is w18.

Such degrees of association are what is called learned data in artificial intelligence. After such learned data is created, when an assessment of normality is actually made on the cultivation environment from now on, that normality will be assessed by using the above learned data. In such a case, the equipment data for providing the corresponding cultivation environment to be assessed and the corresponding environment data are actually measured and thus acquired.

New equipment data and environment data to be acquired may be acquired via various sensors and the information acquisition unit 9.

Based on the new equipment data and environment data acquired in this way, the normality of the cultivation environment from which the new equipment data and environment data have actually been acquired is assessed. In such a case, the degrees of association illustrated in Fig. 12 (Table 1) acquired in advance is referred to. For example, in the case where the acquired new equipment data is the same as or similar to P02 and the environment data is P17, a node 61d is associated through the degrees of association, and this node 61d is associated with "abnormal (less fertilizer)" by w19 and with "abnormal (less light)" by the degree of association w20. In such a case, "abnormal (less fertilizer)" with the highest degree of association is selected as the optimum solution. However, it is not essential to select the one with the highest degree of association as the optimum solution, and "abnormal (less light)", which has the lower degree of association but whose association is recognized, may be selected as the optimum solution. Instead of this, it goes without saying that an output solution to which no arrow is connected may be selected, and any other output solution may be selected in any other priority as long as it is based on any degree of association.

Further, an intermediate node 61 may be selected based on such degrees of association w1 to w12 extending from the inputs. In other words, a higher one of the degrees of association w1 to w12 may be given a higher weight to select the intermediate node 61. However, the degrees of association w1 to w12 may all have the same value, and the weights to select the intermediate node 61 may all be the same.

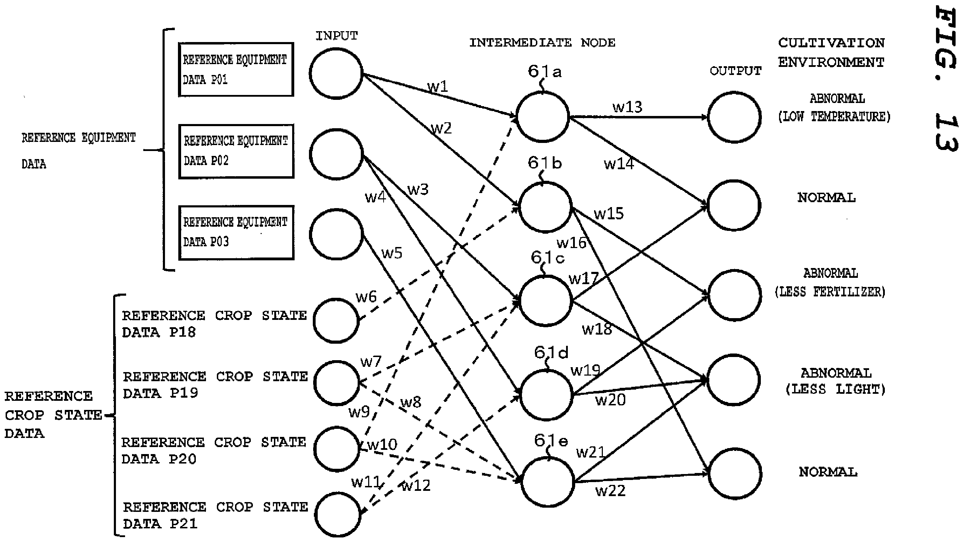

Fig. 13 illustrates an example in which combinations of the above-mentioned reference equipment data and reference crop state data, and three or more levels of degrees of association between the combinations and cultivation environments are set.

As the input data, such reference equipment data and reference crop state data are arranged. As such input data, intermediate nodes illustrated in Fig. 13 are combinations of the reference equipment data and the reference crop state data.

The reference crop state data is data obtained by sensing the state of a crop. The state of the crop can be acquired, for example, through image data. All the states of a crop including dead, sick, or pest-damaged can be grasped from image analysis.

The assessment apparatus 2 acquires in advance such degrees of association w13 to w22 in three or more levels illustrated in Fig. 13. Specifically, in assessing the normality of the actual cultivation environment, the assessment apparatus 2 accumulates the data on the reference equipment data, the reference crop state data, and how the cultivation environment was for these pieces of information, analyzes and examines them, and thus makes the degrees of association illustrated in Fig. 13 in advance. The normality of the cultivation environment can be assessed not only from the equipment data but also from the state of the crop. Combining the equipment data and crop state data makes it possible to assess the normality of the cultivation environment with higher accuracy.

In the example of the degrees of association illustrated in Fig. 13, a node 61b is a node in which reference crop state data P18 (e.g., discolored due to damage caused by pests) is combined with reference equipment data P01 and for which the degree of association for "abnormal (less fertilizer)" is w15 and the degree of association for "normal" is w16.

Similarly, in such a case where the degrees of association are set, new equipment data is acquired and the crop state data is also acquired. The equipment data corresponds to the reference equipment data, and the crop state data corresponds to the reference crop state data.

In assessing the cultivation environment, the degrees of association illustrated in Fig. 13 acquired in advance are referred to. For example, in the case where the acquired equipment data is the same as or similar to reference equipment data P02, the acquired crop state data corresponds to the reference crop state data P19, the combination of them corresponds to a node 61c, and this node 61c is associated with "normal" by the degree of association w17 and with "abnormal (less light)" by the degree of association w18. As a result of such degrees of association, the normality of a cultivation environment in a cultivation building from which new equipment data and crop state data have actually been acquired will be assessed based on w17 and w18.

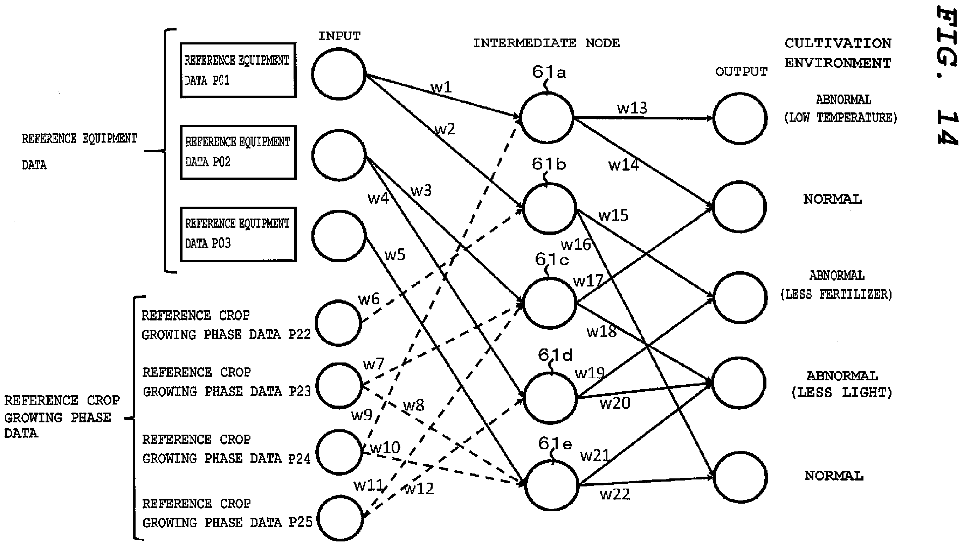

Fig. 14 illustrates an example in which combinations of the above-mentioned reference equipment data and reference crop growing phase data, and three or more levels of degrees of association between the combinations and cultivation environments are set.

As the input data, such reference equipment data and reference crop growing phase data are arranged. As such input data, intermediate nodes illustrated in Fig. 14 are combinations of the reference equipment data and the reference crop growing phase data.

The reference crop growing phase data indicates the growth state of a crop. In other words, it indicates a growing phase in which the seeds of the crop are just being sown, the seedlings are just being planted, it is one month, two months, three months ..., after the planting of the seedlings, or the crop is to be harvested.

The prediction apparatus 2 acquires in advance such degrees of association w13 to w22 in three or more levels illustrated in Fig. 14. Specifically, in assessing the normality of the actual cultivation environment, the prediction apparatus 2 accumulates the data on the reference equipment data, the reference crop growing phase data, and how the cultivation environment was for these pieces of information, analyzes and examines them, and thus makes the degrees of association illustrated in Fig. 14 in advance. The normality of the cultivation environment is affected not only by the equipment data but also by the growing phase of the crop. For example, if it is not the period when the seedlings of a crop were planted, even a sharp drop of temperature caused due to break down of the air conditioning equipment will have little effect on the cultivation of the crop, and thus the cultivation environment is determined to be "normal", while if it is the period when the seedlings of the crop have just been planted, a sharp drop of temperature caused due to break down of the air conditioning equipment in the same period will cause the crop to die, and thus the cultivation environment is determined to be "abnormal". In this way, whether or not the cultivation environment is normal largely depends on crop growing phase data in addition to the equipment data. Accordingly, combining the equipment data and crop growing phase data makes it possible to assess the normality of the cultivation environment with higher accuracy.

In the example of the degrees of association illustrated in Fig. 14, a node 61b is a node in which reference crop growing phase data P22 (e.g., three months after the period when the seedlings were planted) is combined with reference equipment data P01 and for which the degree of association for "abnormal (less fertilizer)" is w15 and the degree of association for "normal" is w16.

Similarly, in such a case where the degrees of association are set, new equipment data is acquired and the crop growing phase data is also acquired. The equipment data corresponds to the reference equipment data, and the crop growing phase data corresponds to the reference crop growing phase data.

In assessing the cultivation environment, the degrees of association illustrated in Fig. 14 acquired in advance are referred to. For example, when the acquired equipment data is the same as or similar to reference equipment data P02 and the acquired crop growth phase data corresponds to the reference crop growth phase data P23, the combination is associated with the node 61c. In this node 61c, "normal" is associated with the degree of association w17, and "abnormality (less light)" is associated with the degree of association w18. As a result of such degrees of association, the normality of a cultivation environment in a cultivation building from which new equipment data and crop growing phase data have actually been acquired will be assessed based on w17 and w18.

Further, in the present invention, for a combination of three or more types of the above-mentioned input parameters, any two or more of the reference environment data, the reference crop state data, and the reference crop growing phase data may be used for the combination in addition to the reference equipment data. Then, the degrees of association between such combinations and the normalities of the cultivation environments are acquired in advance, and in response to acquiring new data, the degrees of association are used to assess the normality of a cultivation environment.

In the above-mentioned degrees of association, each degree of association is expressed by a 10-level evaluation, but it is not limited to this as long as it is expressed by a three or more levels of degree of association, and in other words, it may be 100 levels or 1000 levels as long as it is three or more levels. On the other hand, this degree of association does not include those expressed in two levels, that is, whether or not they are related to each other, either 1 or 0.

According to the present invention having configuration described above, it is possible to easily predict the yield and the quality with a small amount of labor without requiring any special skill. Further, according to the present invention, it is possible to determine the search solution with higher accuracy than when performed by a human. Further, configuring the above-mentioned degrees of association by artificial intelligence (neural network or the like) and then learning them makes it possible to further improve the determination/assessment accuracy.

Further, the present invention has a feature that the optimum physical properties and the generation mechanism are searched for through the degrees of association set in three or more levels. The degree of association can be described by, for example, a numerical value from 0 to 100% instead of the above-mentioned five levels, but the degree of association is not limited to this, and any level can be used as long as it can be described by a numerical value of three or more levels.

By searching for the most probable yield and quality based on the degree of association expressed by a numerical value of three or more levels, in the situation where there are multiple possible candidates for the search solution, the candidates can be displayed in descending order of their degrees of association. Showing to the user them in descending order of the degrees of association in this way makes it possible to preferentially display more probable search solutions.

In addition to this, according to the present invention, it is possible to perform determination without overlooking even a determination/assessment result of output having an extremely low degree of association such as 1%. It is possible to cause the user to pay attention that even a determination/assessment result with an extremely low degree of association is involved as a slight sign and may be useful as the determination/assessment result once every tens or hundreds of times.

Further, the present invention has an advantage that the search policy can be determined depending on how to set a threshold value by performing the search based on such degrees of association of three or more levels. If the threshold value is lowered, a determination/assessment result even with the above-mentioned degree of association being 1% can be picked up without omission, whereas there is a low possibility to detect a more appropriate determination/assessment result suitably, and a lot of noise may be picked up. On the other hand, if the threshold value is raised, there is a high possibility to detect the optimum search solution with high probability, whereas typical degrees of association are as low as they are not required to be taken into consideration but a suitable solution that appears at least once every tens or hundreds of times may be overlooked. It is possible to decide which one of the threshold settings to prioritize based on the ideas of the user side and the system side, but it is possible to increase the degree of freedom in selecting such a point to prioritize.

Further, in the present invention, the above-mentioned degrees of association may be updated. This update may reflect information provided via a public communication network such as the Internet. Further, when images of a crop are captured and in addition, soil information, external environment information, history information, period information, and type information, and also knowledge, information, and data on yield and quality of the crop with such information are acquired, the degrees of association may be increased or decreased according to all the acquired information.

In other words, this update corresponds to learning in the sense of artificial intelligence. Since new data is acquired and it is reflected in the learned data, this is just a learning act.

Further, this update of the degrees of association may be artificial or automatic update performed by the system side or the user side not only based on the information available from the public communication network but also based on the contents of expert research data and papers, conference presentations, newspaper articles, books, and the like. Artificial intelligence may be utilized in such update processing.

Further, the process of first creating the learned model and the above-mentioned update may use not only supervised learning but also unsupervised learning, deep learning, reinforcement learning, and the like. In the case of unsupervised learning, instead of reading and learning a data set of input data and output data, information corresponding to the input data may be read and learned to make the degrees of association related to the output data by itself from the resulting information.

### [Reference Signs List]

- 1: Crop yield prediction system
- 2: Prediction apparatus
- 21: Internal bus
- 23: Display unit
- 24: Control unit
- 25: Operation unit
- 26: Communication unit
- 27: Determination unit
- 28: Storage unit
- 61: Node

## Claims

1. A crop yield prediction program for predicting a yield of a crop, the program causing a computer to execute:
a reference information acquisition step of acquiring reference image information and reference soil information from a captured image of a growing crop, any of a growth state of the crop, damage caused by pests on the crop, and disease occurring in the crop being extracted in the reference image information, a result of identifying components of a soil in which the crop is planted being reflected on the reference soil information;
a degree-of-association acquisition step of acquiring a degree of association between: a combination of the reference image information and the reference soil information acquired in the reference information acquisition step; and a yield of the growing crop as harvested for the combination, the degree of association being represented in three or more levels;
an information acquisition step of, when making a new prediction of the yield of the crop, capturing an image of a new growing crop to acquire image information in which any of a growth state of the crop, damage caused by pests on the crop, and disease occurring in the crop is extracted, and acquiring soil information about a soil in which the crop is planted; and
a prediction step of predicting a yield of the new growing crop with reference to the degree of association acquired at the degree-of-association acquisition step and based on the image information and the soil information acquired through the information acquisition step.

2. A crop yield prediction program for predicting a yield of a crop, the program causing a computer to execute:
a reference information acquisition step of acquiring reference image information and reference external environment information from a captured image of a growing crop, any of a growth state of the crop, damage caused by pests on the crop, and disease occurring in the crop being extracted in the reference image information, a disaster situation including flood and drought in a process of growing the crop being detected in the reference external environment information;
a degree-of-association acquisition step of acquiring a degree of association between: a combination of the reference image information and the reference soil information acquired in the reference information acquisition step; and a yield of the growing crop as harvested for the combination, the degree of association being represented in three or more levels;
an information acquisition step of, when making a new prediction of the yield of the crop, capturing an image of a new growing crop to acquire image information in which any of a growth state of the crop, damage caused by pests on the crop, and disease occurring in the crop is extracted, and acquiring external environment information about a disaster situation including flood and drought in a process of growing the crop; and
a prediction step of predicting a yield of the new growing crop with reference to the degree of association acquired at the degree-of-association acquisition step and based on the image information and the external environment information acquired through the information acquisition step.

3. The crop yield prediction program according to claim 1, wherein
the degree-of-association acquisition step includes acquiring a degree of association between a combination further including reference period information about a growing period of the crop and a yield of the growing crop as harvested for the combination, the degree of association being represented in three or more levels,
the information acquisition step includes further acquiring period information about a growing period of the new growing crop, and
the prediction step includes predicting the yield further based on the period information acquired through the information acquisition step.

4. The crop yield prediction program according to claim 1, wherein
the degree-of-association acquisition step includes acquiring a degree of association between a combination further including reference type information about a type of the crop and a yield of the growing crop as harvested for the combination, the degree of association being represented in three or more levels,
the information acquisition step includes further acquiring type information about a type of the new growing crop, and
the prediction step includes predicting the yield further based on the type information acquired through the information acquisition step.

5. The crop yield prediction program according to claim 1, wherein
the degree-of-association acquisition step includes acquiring the degree of association corresponding to a weighting coefficient for each output of nodes of an artificial intelligence-based neural network.

6. A cultivation environment assessment program for assessing normality of a cultivation environment in which a crop is cultivated, the program causing a computer to execute:
a degree-of-association acquisition step of acquiring in advance a degree of association between: reference equipment data including any one or more of electric power, electricity, voltage, vibration, and sound acquired from air conditioning equipment that provides a cultivation environment for cultivating the crop; and normality of a cultivation environment including temperature or humidity, the degree of association being represented in three or more levels;
an information acquisition step of, when making a new assessment of a cultivation environment of the crop, acquiring equipment data corresponding to the reference equipment data of any one or more of electric power, electricity, voltage, vibration, and sound from the air conditioning equipment that provides the cultivation environment; and
an assessment step of assessing normality of the cultivation environment including temperature or humidity by using the degree of association acquired at the degree-of-association acquisition step and based on the equipment data acquired through the information acquisition step.

7. The cultivation environment assessment program according to claim 6, wherein
the degree-of-association acquisition step includes acquiring a degree of association between: a combination of the reference equipment data and reference environment data in which the cultivation environment is directly sensed; and the normality of the cultivation environment,
the information acquisition step includes acquiring the equipment data and environment data in which the cultivation environment is directly sensed, and
the assessment step includes assessing the normality of the cultivation environment by using the degree of association acquired at the degree-of-association acquisition step and based on the equipment data and environment data acquired through the information acquisition step.

8. The cultivation environment assessment program according to claim 6, wherein
the degree-of-association acquisition step includes acquiring a degree of association between: a combination of the reference equipment data and reference crop state data in which a state of the crop is directly sensed; and the normality of the cultivation environment,
the information acquisition step includes acquiring the equipment data and crop state data in which a state of the crop is directly sensed, and
the assessment step includes assessing the normality of the cultivation environment by using the degree of association acquired at the degree-of-association acquisition step and based on the equipment data and crop state data acquired through the information acquisition step.

9. The cultivation environment assessment program according to claim 6, wherein
the degree-of-association acquisition step includes acquiring a degree of association between: a combination of the reference equipment data and reference crop growing phase data in which a growing phase of the crop is classified; and the normality of the cultivation environment,
the information acquisition step includes acquiring the equipment data and crop growing phase data, and
the assessment step includes assessing the normality of the cultivation environment by using the degree of association acquired at the degree-of-association acquisition step and based on the equipment data and crop growing phase data acquired through the information acquisition step.

10. The cultivation environment assessment program according to claim 6, wherein
the degree-of-association acquisition step includes acquiring in advance the degree of association between nodes of an artificial intelligence-based neural network in the three or more levels.
